# EUROPÄISCHE PATENTSCHRIFT

(11) **EP 1 958 209 B1**
(45) Veröffentlichungstag und Bekanntmachung des Hinweises auf die Patenterteilung: **29.06.2011**
(21) Anmeldenummer: 06818664.2
(22) Anmeldetag: 20.11.2006
(51) Int. Cl.: G21C 9/033

(54) **EINSPEISESYSTEM UND ZUGEHÖRIGES BETRIEBSVERFAHREN**
FEEDING SYSTEM AND ASSOCIATED OPERATING METHOD
SYSTEME D'ALIMENTATION ET PROCEDE D'UTILISATION ASSOCIE

(30) Priorität: 29.11.2005 DE 102005057249
(43) Veröffentlichungstag der Anmeldung: 20.08.2008
(73) Patentinhaber: AREVA NP GmbH, 91052 Erlangen (DE)
(72) Erfinder: MESETH, Johann, 64807 Dieburg (DE)
(74) Vertreter: Hafner-Tergau-Walkenhorst
(86) Internationale Anmeldenummer: PCT/EP2006/011097
(87) Internationale Veröffentlichungsnummer: WO 2007/062758

(56) Entgegenhaltungen:
- WO-A-92/01296
- DE-B- 1 204 346
- FR-A- 2 295 535

## Beschreibung

Die Erfindung betrifft ein Einspeisesystem für eine ein Neutronengift enthaltende Absorberflüssigkeit, zur Schnellabschaltung eines Kernreaktors, mit einem Vorratsbehälter für die Absorberflüssigkeit. Die Erfindung betrifft weiterhin ein Verfahren zum Bereitstellen einer in einem derartigen Einspeisesystem unter einem Betriebsdruck stehenden Absorberflüssigkeit. Die Erfindung betrifft außerdem ein Verfahren zum Einspeisen der Absorberflüssigkeit in eine dem Vorratsbehälter nachgeschaltete Komponente einer Anlage, beispielsweise in einen Kernreaktor. Die Erfindung betrifft schließlich eine Kernkraftanlage, insbesondere eine Siedewasser-Kernkraftanlage mit einem derartigen Einspeisesystem.

Bei kerntechnischen Anlagen ist in der Regel ein Einspeisesystem für eine sogenannte Absorberflüssigkeit als sicherheitstechnische Einrichtung vorgesehen. Insbesondere bei einer Siedewasser-Kernkraftanlage ist es notwendig, schnell wirkende Mittel zur Notabschaltung des Reaktorkerns bereitzustellen, falls beispielsweise der Antrieb der Steuerstäbe, mit denen die Kernreaktion im Normalfall kontrolliert wird, versagt. Zu diesem Zweck kann im Störfall eine Einleitung einer Absorberflüssigkeit mit einem hohen Absorptionsquerschnitt für Neutronen vorgesehen sein. Üblicherweise wird dazu eine Borlösung verwendet, wobei das in diesem Zusammenhang auch als Neutronengift bezeichnete Bor die Absorption freier Neutronen bewirkt. Dadurch wird der Reaktorkern im Störfall sicher in einen unterkritischen Zustand überführt.

Indem die Absorberflüssigkeit in einem Vorratsbehälter des Einspeisesystems unter einem hohen Druck bereitgestellt wird, ist jederzeit eine zügige Einleitung des Einspeisevorganges in den Reaktorkern ermöglicht, ohne dass zuerst versagensanfällige aktive Systemkomponenten, wie etwa Förderpumpen, aktiviert werden müssten. Zur Verwirklichung dieses passiven Sicherheitskonzeptes ist es also notwendig, die Absorberflüssigkeit ggf. über Jahre hinweg unter einem vergleichsweise hohen Betriebsdruck bereitzuhalten.

Gemäß einem bekannten Konzept könnte der Druck in einem als Druckspeicher ausgeführten Vorratsbehälter für die Absorberflüssigkeit durch ein über der Flüssigkeit befindliches Stickstoffpolster aufgebaut werden. Hierzu ist jedoch ein aufwändiges Stickstoff-Versorgungssystem erforderlich. Nachteilig ist zudem bei dem auslegungsgemäß vorgesehenen hohen Betriebsdruck der relativ hohe Raumbedarf für das Stickstoffpolster im Verhältnis zum Volumen der Absorberflüssigkeit. Ferner löst sich der Stickstoff im Laufe der Zeit zumindest teilweise in der Absorberflüssigkeit (üblicherweise Borsäure), so dass bei der Flüssigkeitseinspeisung ein nichtkondensierbares Gas in den Reaktor miteingeleitet wird, was u. a. die Kühlwirkung von Kondensatoren bzw. Notkondensatoren beeinträchtigt.

Aus der DE 198 46 459 A1 ist ein Einspeisesystem für Kühlflüssigkeit zur Notkühlung eines Kernreaktors bekannt, bei dem der erforderliche Betriebsdruck erreicht wird, indem die in einem Druckspeicherbehälter vorgehaltene Kühlflüssigkeit durch eine im Druckspeicherbehälter angeordnete Heizvorrichtung erhitzt wird. Dabei bildet sich abhängig von der ursprünglichen Füllstandshöhe über dem Flüssigkeitspegel durch Verdampfen der Flüssigkeit ein Dampfpolster aus. Im Bedarfsfall, also im Reaktorstörfall, drückt dieses Dampfpolster bei gleichzeitiger Entspannung die Kühlflüssigkeit durch eine im Bodenbereich des Druckbehälters angeschlossene Speiseleitung in den Reaktorkern. Durch die Anordnung der Heizvorrichtung in einem oberen Abschnitt des Speicherbehälters ist eine Temperaturschichtung der Kühlflüssigkeit bewirkt, so dass im Bedarfsfall zuerst vergleichsweise kalte, später aber in zunehmendem Maße erwärmte Kühlflüssigkeit aus dem Speicherbehälter ausströmt. Eine Anwendung dieses Konzeptes im Rahmen eines Boreinspeisesystems, bei dem eine borhaltige Flüssigkeit also nicht nur zur Kühlung, sondern vor allem zur Schnellabschaltung eines Kernreaktors dient, ist ebenfalls bekannt.

Chemische Untersuchungen haben nun jedoch ergeben, dass bei einer langjährigen Lagerung der Absorberflüssigkeit, die vorteilhafterweise als Borlösung vorliegen kann, bei den im Rahmen des geschilderten Konzeptes auslegungsgemäß vorgesehenen und zur Druckerzeugung notwendigen Temperaturen mit einer fortschreitenden chemischen Dissoziation der Absorberflüssigkeit gerechnet werden muss. Zudem könnte es zu einer erhöhten Wechselwirkung der Absorberflüssigkeit mit dem Material der Behälterwände kommen, die sich unter Umständen unvorteilhaft auf die Druckstabilität bzw. die Dichtigkeit des Vorratsbehälters auswirkt.

Einspeisesysteme mit getrenntem Druckbehälter und Neutronenabsorbervorratsbehälter sind aus den Dokumenten WO 92/01296, FR-A-2 295 535 und DE 12 04 346 B bekannt.

Der Erfindung liegt daher die Aufgabe zugrunde, ein Einspeisesystem der eingangs genannten Art anzugeben, das bei einfach gehaltener Bauweise dauerhaft eine hohe betriebliche Sicherheit gewährleistet und die aufgeführten Nachteile der bekannten Systeme vermeidet. Es soll ferner ein zum Betrieb des Einspeisesystems besonders geeignetes Verfahren - und zwar jeweils für den Bereithaltezeitraum und für den eigentlichen Einspeisevorgang - angegeben werden.

Erfindungsgemäß wird die genannte Aufgabe durch ein Einspeisesystem nach Anspruch 1 gelöst.

Die Erfindung geht dabei von der Überlegung aus, dass im Interesse einer hohen betrieblichen Sicherheit eine chemische Zersetzung der Absorberflüssigkeit oder sonstige chemische Reaktionen innerhalb der Absorberflüssigkeit oder mit den Wänden des umgebenden Vorratsbehälters und damit eine mögliche Korrosion der Wandmaterialien auch bei vergleichsweise langer Bereithaltung der Absorberflüssigkeit über einen Zeitraum von mehreren Jahren oder gar Jahrzehnten weitestgehend vermieden werden sollten. Da aber die chemische Reaktivität in der Regel mit steigender Temperatur ebenfalls ansteigt, sollte die Absorberflüssigkeit vergleichsweise kühl gelagert sein, also etwa bei Zimmertemperatur. Andererseits sollte die Absorberflüssigkeit im Vorratsbehälter während des gesamten Bereithaltezeitraumes unter einem vorgegebenen Betriebsdruck gehalten werden können, so dass im Bedarfsfall eine möglichst schnelle und vollständige Einspeisung in ein Reaktorkühlsystem oder in einen Reaktorkern realisierbar ist. Die zur Druckerzeugung notwendigen Maßnahmen sollten dabei zu einer möglichst geringen Beeinflussung der Absorberflüssigkeit hinsichtlich ihrer sonstigen physikalischen oder chemischen Eigenschaften führen. Dies wird im vorliegenden Fall durch einen vom Vorratsbehälter räumlich getrennten Druckbehälter mit einem unter einem Betriebsdruck stehenden Treibfluid erreicht, der über eine einen Druckausgleich bewirkende Überströmleitung mit dem Vorratsbehälter verbunden ist. Einerseits ist also bedingt durch die

Überströmleitung der Druck in den beiden Behältern stets gleich groß, andererseits hat die räumliche Trennung der beiden Funktionen "Speicherung der Absorberflüssigkeit" und "Aufrechterhaltung eines Druckpolsters" mittels eines Treibfluids zur Folge, dass jeder der beiden Behälter hinsichtlich seiner chemischen Verträglichkeit oder weiterer Eigenschaften spezifisch auf das jeweils in ihm enthaltene Fluid (Absorberflüssigkeit oder Treibfluid) abgestimmt und ausgelegt sein kann. Die wechselseitige Beeinflussung von Absorberflüssigkeit und Treibfluid ist dabei aufgrund der räumlichen Trennung ausgesprochen gering.

Der Druckbehälter des Einspeisesystem weist eine regelbare Heizeinrichtung auf. In einer bevorzugten Ausführung ist die Heizeinrichtung bezüglich ihrer Heizleistung zur Erzeugung und Aufrechterhaltung eines einstellbaren Drucks ausgelegt, wobei bevorzugt der Druck die Führungsgröße der Regelung darstellt. Die eigentliche Druckerzeugung kann somit analog zu bekannten Systemen erfolgen, indem der Druckbehälter bis zu einer vorgebbaren Füllhöhe (d. h. nicht vollständig) mit einem Treibfluid gefüllt wird. Ein Teil des Treibfluids wird durch die Heizeinrichtung verdampft, so dass sich ein Dampfpolster im oberen Bereich des Druckbehälters ausbildet und der Druck durch das Dampfpolster gehalten wird. Der Vorteil des Dampfpolsters liegt darin, dass der Betriebsdruck sehr einfach auf einen gewünschten Wert, beispielsweise auf den Sättigungsdampfdruck des Treibfluids, eingestellt und auch gehalten werden kann. Da der Dampf kompressibel ist, führt eine geringe Temperaturerhöhung nicht zu einem überproportionalen Druckanstieg, wie er beispielsweise bei einem Druckspeicherbehälter zwangsläufig auftritt, der vollständig mit einer inkompressiblen Flüssigkeit gefüllt ist. Insgesamt kann somit auf eine bekannte und bereits bewährte Technologie mitsamt dem dazu gehörigen Know-how zur Druckerzeugung zurückgegriffen werden, wodurch sich das Notfalleinspeisesystem gemäß dem neuen Konzept besonders einfach und kostengünstig verwirklichen lässt. Insbesondere ist bei entsprechender Gestaltung und Dimensionierung der Überströmleitung, die im Folgenden näher beschrieben wird, eine weitgehende thermische Entkopplung von Vorratsbehälter und Druckbehälter gewährleistet, so dass das Treibfluid auch unter einer im Vergleich zur Absorberflüssigkeit hohen Betriebstemperatur bereit gehalten werden kann, sofern dies für eine einfache Erzeugung und Aufrechterhaltung bzw. Regelung des Betriebsdrucks günstig oder aus sonstigen Erwägungen erwünscht ist.

Die zum Druckausgleich und zur Führung des Treibfluids vorgesehene Überströmleitung verbindet den Bodenbereich des Druckbehälters mit dem Deckenbereich des Vorratsbehälters. Mit anderen Worten: Der am Druckbehälter vorgesehene Anschluss der Überströmleitung ist in einem unteren Wandabschnitt nahe dem Behälterboden angeordnet. Das andere Ende der Überströmleitung mündet auf der Seite des Vorratsbehälters in einen oberen Abschnitt der Behälterwand. Insbesondere kann dieser Anschluss auch durch eine als Kuppel ausgestaltete Decke des Vorratsbehälters geführt sein. Vorzugsweise weist die Überströmleitung im Bereich ihres zum Druckbehälter gerichteten Endes einen in der Art eines Siphons geführten unteren Teilabschnitt mit einem unterhalb des Bodens des Druckbehälters liegenden Tiefpunkt auf. Das an den Druckbehälter angeschlossene Ende also das in Bezug auf die Strömungsrichtung beim Einspeisevorgang eingangsseitige Ende der Überströmleitung ist in der Nähe des Anschlusses also als Fallrohrstück ausgestaltet. Auf der zum Vorratsbehälter hin gerichteten (Ausgangs-) Seite weist die Überströmleitung vorzugsweise einen oberen Teilabschnitt mit einem oberhalb der Decke des Vorratsbehälters angeordneten Hochpunkt auf, so dass hier anschlusseitig ebenfalls ein Fallrohrstück vorgesehen ist. Der untere und der obere Teilabschnitt der Überströmleitung sind vorzugsweise durch ein annähernd vertikal verlaufendes Steigrohrstück miteinander verbunden.

Diese Art der Leitungsführung ist für die bereits angesprochene thermische Entkopplung der jeweils im Druckbehälter und im Vorratsbehälter vorgehaltenen Fluide ausgesprochen vorteilhaft, da insbesondere durch den unteren, siphonartigen Teilabschnitt ein konvektiver Wärmefluss oder eine Wärmeleitung zum Vorratsbehälter (insbesondere aufgrund der Fallrohrstücke) weitestgehend unterdrückt wird. Die Leitungsanordnung hat außerdem den Vorteil, dass beim Aktivieren des Einspeisesystems zunächst kühleres, flüssiges Treibfluid aus dem Bodenbereich des Druckbehälters später heißes, flüssiges Treibfluid und erst anschließend dampfförmiges Treibfluid, das ursprünglich das Dampfpolster im Deckenbereich des Druckbehälters bildet, in den Vorratsbehälter für die Absorberflüssigkeit überströmt. Auf diese Weise werden die Wände des Vorratsbehälters beim Eintritt des Treibfluids vergleichsweise schonend vorgewärmt. Dadurch wird die Kondensation von Treibfluid-Dampf verringert, welche andernfalls die zuvor kalten Wände des Vorratsbehälters sehr schnell aufheizen würde. Ein Temperaturschock wird somit vermieden. Zudem nimmt der Dampfdruck während des Einspeisevorgangs aufgrund des durch das flüssige Treibfluid bewirkten Vorwärmeffektes vergleichsweise langsam ab. Selbst nachdem ein Großteil der Absorberflüssigkeit bereits in den Reaktor eingeleitet wurde, steht daher noch ein ausreichender Restdruck zur vollständigen Verdrängung der Absorberflüssigkeit aus dem Vorratsbehälter zur Verfügung.

Eine zur bedarfsweisen Entnahme von Absorberflüssigkeit vorgesehene Ausströmöffnung, etwa in Form eines mit einem Absperrventil versehenen Auslassstutzens ist, im Bodenbereich des Vorratsbehälters angeordnet. Der Austritt der Absorberflüssigkeit wird dabei durch den hydrostatischen Druck der Flüssigkeitssäule im Vorratsbehälter unterstützt.

In einer bevorzugten Ausführungsform sind die druckbelasteten Komponenten des Einspeisesystems, also insbesondere der Druckbehälter, der Vorratsbehälter und die Überströmleitung, für einen Betriebsdruck von über 100 bar, insbesondere für einen Betriebsdruck von etwa 150 bar, ausgelegt. Dies entspricht einem für einen Einsatz als Notfalleinspeisesystem in einem Kernkraftwerk besonders zweckmäßigen Druckwert, der ausreichende Sicherheitsreserven beinhaltet.

Zur Erzeugung und Aufrechterhaltung des angestrebten Betriebsdrucks, der vorzugsweise dem Sättigungsdampfdruck des Treibfluids entspricht, wird das Treibfluid unter Abstimmung auf die vorgesehene Geometrie des Druckbehälters auf eine Betriebstemperatur von über 300 °C, insbesondere auf etwa 340 °C, erhitzt. In weiterer vorteilhafter Ausgestaltung ist der Druckbehälter daher auch hinsichtlich seiner Materialwahl für eine dauerhafte Bereitstellung von unter Druck stehendem Treibfluid mit einer derartig hohen Temperatur ausgelegt.

Der Vorratsbehälter für die Absorberflüssigkeit muss im Regelfall, d. h. während des Bereithaltezeitraums oder der "Standby" - Zeit bis zu einem Reaktorstörfall, keine besonderen Anforderungen an die Temperaturfestigkeit erfüllen, da die Absorberflüssigkeit lediglich ungefähr Zimmertemperatur aufweist. Nur während des eigentlichen Einspeisevorganges kommt es zu einer vergleichsweise kurzzeitigen Temperaturbelastung durch das überströmende heiße Treibfluid. Der Vorratsbehälter kann also aus einem hinsichtlich seiner Hitzebeständigkeit im Vergleich zum Druckbehälter weniger hochwertigen und daher preiswerteren Material gefertigt sein.

Das Einspeisesystem ist aufgrund seiner Auslegungsprinzipien (insbesondere Passivität und Langlebigkeit) besonders zur Bereitstellung einer Absorberflüssigkeit zur bedarfsweisen Notabschaltung einer Kernkraftanlage geeignet. Dazu ist der Vorratsbehälter des Einspeisesystems vorzugsweise derart dimensioniert, dass er eine zur Abschaltung eines Kernreaktors ausreichende Menge an Absorberflüssigkeit aufnehmen kann. Der Druckbehälter ist dabei vorzugsweise derart dimensioniert, dass er eine zur vollständigen Verdrängung der Absorberflüssigkeit aus dem Vorratsbehälter ausreichende Menge an Treibfluid aufnehmen kann, wobei diese Menge unter anderem von dem angestrebten Betriebsdruck und der angestrebten Betriebstemperatur sowie von der Art der Fluide abhängen kann.

Als besonders geeignete Absorberflüssigkeit zur Schnellabschaltung und/oder Notkühlung eines Kernreaktors hat sich eine wässrige Borlösung bewährt. Insbesondere kann eine etwa 13-prozentige Borlösung, beispielsweise eine Natriumpentaborat-Lösung, als Absorberflüssigkeit vorgesehen sein. Gegenüber anderen denkbaren Absorberflüssigkeiten mit einem hohen Absorptionsquerschnitt für Neutronen zeichnet sich eine Borlösung zumindest bei nicht zu hohen Temperaturen durch eine lange Haltbarkeit und relativ gute chemische Verträglichkeit gegenüber den in der Regel aus Stahl, gefertigten Wänden des Vorratsbehälters aus.

Als einfach bereitzustellendes und mit der Borlösung besonders gut verträgliches Treibfluid ist Wasser vorgesehen. In der verdampften Form, d. h. im Dampfpolster des Druckbehälters, liegt das Wasser dabei als Wasserdampf vor.

Die auf das Verfahren zum Bereitstellen einer unter einem Betriebsdruck stehenden Absorberflüssigkeit bezogene Aufgabe wird dadurch gelöst, dass der Betriebsdruck durch Erhitzen des Treibfluids in dem Druckbehälter des Einspeisesystems erzeugt wird. Dabei wird das Treibfluid in einem unteren Bereich des Druckbehälters in flüssiger Form vorgehalten. Durch die Einwirkung der Heizeinrichtung, die bevorzugt als elektrische Heizeinrichtung oder als ein Wärmetauschersystem ausgeführt sein kann, wird ein Teil der Flüssigkeitsmenge verdampft, so dass sich im oberen Bereich des Druckbehälters ein Dampfpolster ausbildet. Die Heizeinrichtung ist Bestandteil eines Regelsystems und zudem hinsichtlich ihrer erreichbaren Heizleistung ausreichend groß dimensioniert, so dass ein Dampfpolster mit einem einstellbaren, zeitlich konstanten Druck dauerhaft aufrecht erhalten werden kann. Bei Vorhandensein eines Dampfpolsters ist die Einstellung und Aufrechterhaltung des gewünschten Druckwertes im Vergleich zu einem vollständig mit Flüssigkeit gefüllten Druckspeicher wesentlich einfacher zu bewerkstelligen.

Im Bedarfsfall wird die unter einem Betriebsdruck bereitgestellte Absorberflüssigkeit in eine dem Vorratsbehälter nachgeschaltete Komponente eines Kernreaktors, eingespeist. Ein derartiger Bedarfsfall liegt beispielsweise dann vor, falls die normalerweise für eine Steuerung des Neutronenflusses vorgesehenen Steuerelemente oder Steuerstäbe aufgrund eines Fehlers im Antrieb oder in der Ansteuerung nicht in den Kern eingefahren werden können. In diesem Fall wird ein Ventil oder eine Absperrvorrichtung des Vorratsbehälters geöffnet, so dass die unter Druck bereitgehaltene Absorberflüssigkeit über eine Verbindungsleitung in den Reaktordruckbehälter eingeleitet wird. Vorzugsweise strömt dabei aufgrund der Entspannung des aus verdampftem Treibfluid gebildeten Dampfpolsters im Druckbehälter zuerst flüssiges und anschließend dampfförmiges Treibfluid in den Vorratsbehälter über, wobei die darin ursprünglich vorhandene Absorberflüssigkeit nach und nach verdrängt wird. Das Treibfluid Wasser bzw. Wasserdampf zum Einsatz kommt, strömt also bevorzugt zunächst heißes Wasser, anschließend Sattwasser und schließlich Sattdampf vom Druckbehälter in den Vorratsbehälter über, wobei gleichzeitig der Behälterdruck sinkt. Durch diese vorteilhafte Reihenfolge wird ein Temperaturschock an den Wänden des Vorratsbehälters vermieden.

In weiterer vorteilhafter Weiterbildung wird die Überströmgeschwindigkeit des Treibfluids während eines derartigen Einspeisevorgangs derart eingestellt, dass zwar einerseits ein möglichst hoher Durchsatz pro Zeiteinheit erreicht wird und damit eine schnelle Reaktorabschaltung erfolgen kann, dass aber andererseits eine Vermischung des Treibfluids mit der Absorberflüssigkeit im Wesentlichen unterbleibt. Ein derartiger Wert der Überströmgeschwindigkeit kann etwa durch eine geeignete Drosseleinrichtung eingestellt werden oder bereits durch die Dimensionierung der Überströmleitung selbst vorgegeben sein. Der Vorteil des auf diese Weise durchgeführten Einspeiseverfahrens besteht darin, dass die sich aufgrund der Dichteunterschiede im Vorratsbehälter einstellende Temperaturschichtung von kalter Absorberflüssigkeit und darüber befindlicher heißer Treibflüssigkeit bestehen bleibt. Es wird also nur kalte Absorberflüssigkeit in den Reaktorkern eingeleitet. Nach dem vollständigen Verdrängen der Absorberflüssigkeit aus dem Vorratsbehälter hat der im Einspeisesystem vorliegende Druck dann vorteilhafter Weise so stark abgenommen, dass die Strömungsvorgänge selbsttätig zum Erliegen kommen. Damit wird das heiße Treibfluid vom Reaktorkern ferngehalten.

Das Einspeisesystem ist Bestandteil einer Kernkraftanlage. Bevorzugt ist es als so genanntes Vergiftungssystem ausgeführt, mit dem die Kernreaktion in einem Siedewasserreaktor abgeschaltet werden kann, falls sich bei einem gravierenden Störfall die Steuerstäbe nicht mehr in den Reaktorkern einfahren lassen. Alternativ oder zusätzlich könnte vorgesehen sein, das vom Einspeisesystem unter hohem Druck bereitgestellte Fluid zum Notantrieb der Steuerstäbe selbst zu nutzen, wodurch ein zum üblicherweise elektrischen Antrieb der Steuerstäbe redundantes, hydraulisches Antriebssystem verwirklicht wird. Die im Vorratsbehälter des Einspeisesystems vorgehaltene Flüssigkeit ist in diesem Fall somit als Antriebsflüssigkeit für die Steuerstäbe anzusehen.

In einer weiteren Alternative wird das Einspeisefluid in einer zweckdienlichen Weise einem Notkühlsystem einer Druckwasser-Kernkraftanlage als Notkühlfluid (in der Regel Notkühlwasser) zugeführt. Das Einspeisesystem wird demnach bevorzugt als so genannter Akkumulator für das Notfallkühlwasser bei einer Druckwasser-Kernkraftanlage verwendet.

Die mit der Erfindung erzielten Vorteile bestehen insbesondere darin, dass durch die räumliche Trennung der Funktionen "Flüssigkeitsspeicherung" und "Druckerzeugung" in Form eines jeweils zur Aufnahme vorgesehenen Vorratsbehälters und eines Druckbehälters eine wirkungsvolle chemische und thermische Entkopplung der Absorberflüssigkeit vom Treibfluid erreicht werden kann, wobei durch die die beiden Komponenten des Einspeisesystems verbindende Überströmleitung sichergestellt ist, dass die Absorberflüssigkeit jederzeit entnahmebereit unter einem Betriebsdruck vorgehalten wird. Ein derartiges Design eines Einspeisesystems, bei dem insbesondere ein Aufheizen des Vorratsbehälters für die Absorberflüssigkeit unterbunden ist, bietet auch im langjährigen Dauerbetrieb bzw. "Stand-by"-Modus eine besonders hohe betriebliche Sicherheit, da eine chemische Reaktion der Absorberflüssigkeit mit dem Vorratsbehälter und damit auch eine chemische Dissoziation der Absorberflüssigkeit ausgesprochen gering gehalten ist.

Ein Ausführungsbeispiel der Erfindung wird anhand einer Zeichnung näher erläutert. Darin zeigen in jeweils schematischer Darstellung:
- Fig. 1: ein Einspeisesystem für eine Absorberflüssigkeit, und '
- Fig. 2: einen Ausschnitt aus einer Siedewasser-Kernkraftanlage mit einem Einspeisesystem gemäß Fig. 1 zur Schnellabschaltung des Reaktorkerns.
Gleiche Teile sind in beiden Figuren mit denselben Bezugszeichen versehen.

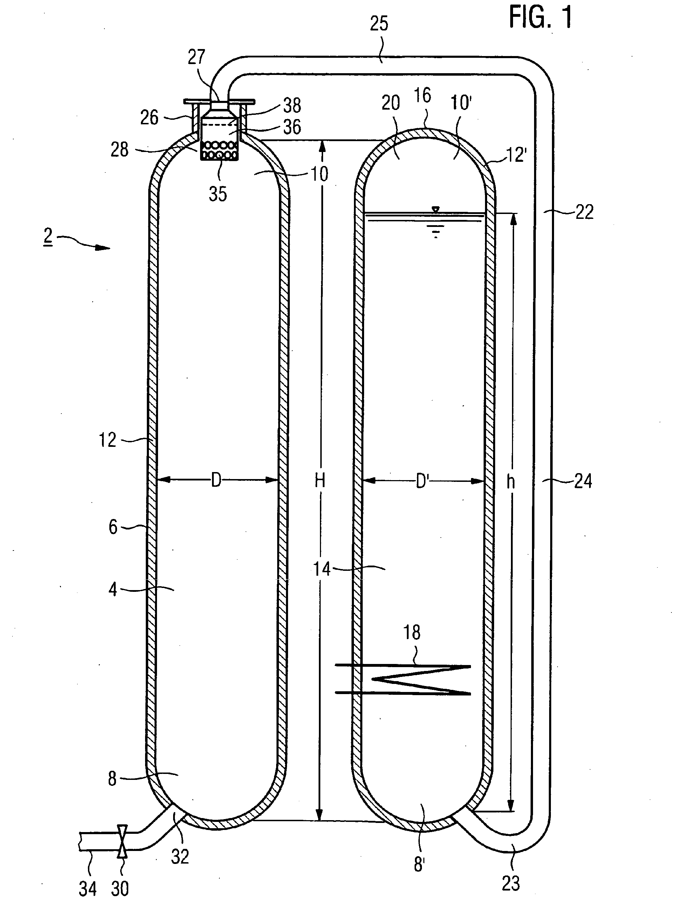

Das in Fig. 1 in schematischer Weise im Schnitt dargestellte Einspeisesystem 2 dient zur Bereitstellung und bedarfsgerechten Einspeisung von unter Druck stehender Absorberflüssigkeit 4 in eine dem Einspeisesystem 2 nachgeschaltete Komponente einer Anlage, insbesondere in einen Kernreaktor. Im Ausführungsbeispiel handelt es sich bei der Absorberflüssigkeit 4 um eine 13-prozentige Natriumpentaborat-Lösung, die bei einem Störfall eines hier nicht näher dargestellten Siedewasserreaktors in den Reaktorkern eingeleitet werden soll, wobei die Boratome der Borlösung aufgrund ihres vergleichsweise hohen Absorptionsquerschnittes für Neutronen einen Einfang freier Neutronen bewirken. Dadurch lässt sich der Reaktor in verhältnismäßig kurzer Zeit (etwa 20 Sekunden nach der Einspeisung der Absorberflüssigkeit 4) sicher abschalten.

Zur Bereithaltung der Absorberflüssigkeit 4 ist ein druckstabiler Vorratsbehälter 6 vorgesehen, der während des Bereithaltezeitraumes vollständig mit der Absorberflüssigkeit 4 gefüllt ist. Dabei ist der Vorratsbehälter 6 als aufrecht stehender, zylindrischer Tank mit einem jeweils halbkugelförmigen Bodenbereich 8 und einem Deckenbereich 10 ausgeführt. Die Bauhöhe H und der Durchmesser D und somit auch das Volumen des Vorratsbehälters 6 sind dem Einsatzzweck in einem Kernkraftwerk angepaßt und weisen beispielsweise die Werte H = 7,0 m und D = 0,8 m auf. Das Fassungsvermögen des Vorratsbehälters 6 entspricht damit der zur Notabschaltung des Reaktorkerns vorgesehenen Menge an Absorberflüssigkeit 4. Die Behälterwand 12. ist als besonders druckstabile und korrosionsbeständige Stahlwand aus einem hochwertigen Stahl, beispielsweise einem austenitischen Stahl, gefertigt.

Entsprechend der Auslegung des Einspeisesystems 2 als passives Sicherheitssystem muss die Absorberflüssigkeit 4 während des möglicherweise viele Jahre überdauernden Bereithaltezeitraumes, also gewissermaßen im "Standby"-Modus, permanent unter einem Betriebsdruck von vorzugsweise etwa 150 bar vorgehalten werden. Die Temperatur der Absorberflüssigkeit 4 sollte dabei aber zur Vermeidung einer erhöhten Reaktivität, die zur Korrosion der umgebenden Behälterwand 12 und zu einer Zersetzung der Borlösung führen könnte, Zimmertemperatur nicht wesentlich überschreiten. Im Ausführungsbeispiel ist daher eine Lagerung der Absorberflüssigkeit 4 bei einer Temperatur von etwa 30 °C vorgesehen.

Das Einspeisesystem 2 ist aufgrund der vergleichsweise niedrigen Temperatur der Absorberflüssigkeit 4 für eine besonders hohe betriebliche Sicherheit während des Standby-Modus ausgelegt, wobei weiterhin eine Beeinflussung der Absorberflüssigkeit 4 durch die zur Druckerzeugung notwendigen Maßnahmen möglichst vermieden sein soll. Zur Realisierung der genannten Temperatur- und Druckverhältnisse im Vorratsbehälter ist daher die auf der Verdampfung eines Treibfluids 14 beruhende und mit starker Wärmeentwicklung verbundene Erzeugung und Aufrechterhaltung eines Druckpolsters vom Vorratsbehälter 6 entkoppelt. Dazu ist ein separater Druckbehälter 16 vorgesehen, der im Ausführungsbeispiel ähnlich wie der Vorratsbehälter 6 aufgebaut ist und auch ungefähr die gleichen Dimensionen aufweist. Der Druckbehälter 16 weist hier also die gleiche Bauhöhe H und den gleichen Durchmesser D' = D wie der Vorratsbehälter 6 auf. Beide Behälter sind zudem auf der gleichen Höhe angeordnet. Während das Volumen des Druckbehälters 16 Randbedingungen unterliegt, die weitestgehend durch den Verwendungszweck (insbesondere durch den zu realisierenden Betriebsdruck, die zu verdrängende Menge an Absorberflüssigkeit 2 und ggf. durch weitere Auslegungskriterien) vorgegeben sind, besteht hinsichtlich der konkreten Form und Anordnung des Druckbehälters 16 ähnlich wie beim Vorratsbehälter 6 eine weitreichende Gestaltungsfreiheit.

Der Druckbehälter 16 ist im Betriebsfall bis zu einer Füllhöhe h mit einem flüssigen Treibfluid 14 gefüllt. Das Treibfluid 14, in diesem Fall Wasser, wird durch eine regelbare Heizeinrichtung 18 erhitzt und dabei teilweise verdampft, so dass sich über dem Flüssigkeitsspiegel ein Dampfpolster 20, in dem diesem Fall also ein Wasserdampfpolster, ausbildet, welches aufgrund seiner Kompressibilität die eigentliche Druckspeicherung bewirkt. Die Regelung der etwa durch elektrische Heizelemente oder durch ein Wärmetauschersystem gebildeten und vorzugsweise in einem unteren Bereich des Druckbehälters 16 angeordneten Heizeinrichtung 18 erfolgt derart, dass ein über die gesamte Stand-by-Zeit ungefähr konstanter Betriebsdruck von etwa 150 bar aufrecht erhalten wird. Dazu ist vorgesehen, das im Druckbehälter 16 befindliche Wasser auf eine mittlere Temperatur von etwa 340 °C zu erhitzen. Diese Werte entsprechen dem Sättigungsdampfdruck bzw. der Sättigungstemperatur. Die Behälterwand 12' des Druckbehälters 16 muss also nicht nur besonders druckstabil, sondern auch vergleichsweise hitzebeständig sein. Zur Verringerung der Wärmeverluste (vor allem durch Wärmestrahlung) ist der Druckbehälter 16 an seiner Außenseite mit einer nicht näher dargestellten thermischen Isolierung versehen.

Der Druckbehälter 16 ist medienseitig über eine Überströmleitung 22 mit dem Vorratsbehälter 6 verbunden, wodurch innerhalb des gesamten Einspeisesystems 2 die gleichen Druckverhältnisse herrschen. Dabei ist die Überströmleitung 22 in der Art eines Siphons aus den Bodenbereich 8' des Druckbehälters 16 herausgeführt. Die Überströmleitung 22 weist also einen unteren Teilabschnitt 23 mit einem unterhalb des Bodens des Druckbehälters 16 liegenden Tiefpunkt auf. An den unteren Teilabschnitt 23 schließt sich in Strömungsrichtung des Treibfluids 14 gesehen (gezogen auf den Einspeisevorgangs) ein vertikal verlaufendes Steigrohr 24 an, das schließlich in einen im Wesentlichen bogenförmigen oberen Teilabschnitt 25 übergeht. Der Hochpunkt des oberen Teilabschnitts 25 liegt dabei oberhalb der Decke des Vorratsbehälters 6. Zum Vorratsbehälter 6 hin ist die Überströmleitung 22 in einen aus dem kuppelartigen Deckenbereich 10 des Vorratsbehälters 6 herausragenden Anschlussflansch 26 hinein geführt. Bedingt durch den vom Dampfpolster 20 ausgeübten Druck füllt das flüssige Treibfluid 14 die Überströmleitung 22 vollständig aus. Ein möglicherweise ursprünglich in der Überströmleitung vorhandenes Luftpolster wurde bereits während des vorangehenden Aufheizvorganges bei ca. 100 ° C ausgetrieben. An der Grenzfläche 27 zwischen der Absorberflüssigkeit 6 (Borlösung mit vergleichsweise hoher Dichte) und dem Treibfluid 14 (Wasser mit niedrigerer Dichte) kommt es aufgrund der Dichteunterschiede zu keiner Vermischung der beiden Flüssigkeiten. Vielmehr bildet sich dort eine geschichtete Flüssigkeitssäule aus.

Durch die Art der Leitungsführung ist bei geeigneter Dimensionierung des Leitungsdurchmessers ein konvektiver Wärmetransport innerhalb der Überströmleitung 22 ebenso zu vernachlässigen wie die Wärmeleitung. Mit anderen Worten: Das im Mündungsbereich 28 zum Vorratsbehälter 6 oder knapp darüber in der Überströmleitung 22 befindliche flüssige Treibfluid 14 weist ungefähr die gleiche Temperatur wie die Absorberflüssigkeit 4 innerhalb des Vorratsbehälters 6 auf, also ungefähr 30 °C. Zum Druckbehälter 16 hin steigt die Temperatur des Fluids in der Überströmleitung 22 kontinuierlich an. Eine Aufheizung der Absorberflüssigkeit 4 findet wegen der im Wesentlichen stationären Temperaturverteilung innerhalb der Überströmleitung 22 somit nicht statt.

Beim Aktivieren des Einspeisesystems 2 wird ein bis dahin verschlossen gehaltenes Absperrventil oder eine sonstige Absperrvorrichtung 30 geöffnet, so dass die unter Druck stehende Absorberflüssigkeit 4 aus der im Bodenbereich 8 des Vorratsbehälters 6 angeordneten Ausströmöffnung 32 austreten kann. An die Ausströmöffnung 32 schließt sich eine Verbindungsleitung 34 zu der mit Absorberflüssigkeit 4 zu speisenden Komponente, beispielsweise ein Bypass eines Reaktorkerns, an. Die Absperrvorrichtung 30 kann, wie hier gezeigt, in die Verbindungsleitung 34 oder auch direkt in die Ausströmöffnung 32 integriert sein.

Während des Einspeisevorganges entspannt sich das im Deckenbereich 10' des Druckbehälters 16 zuvor aufgebaute Dampfpolster 20 und drückt dabei das unter ihm befindliche, als Treibfluid 14 wirkende heiße Wasser in die Überströmleitung 22 und anschließend in den Vorratsbehälter 6. Während dieses Vorganges strömt zuerst das ursprünglich im Bodenbereich 8' des Druckbehälters 16 stehende Heißwasser, anschließend das direkt unterhalb des Dampfpolsters 20 vorliegende Sattwasser und schließlich der das Dampfpolster 20 bildende Sattdampf selbst vom Druckbehälter 16 in den Vorratsbehälter 6 über, wobei gleichzeitig der Behälterdruck sinkt. Beim Eintritt des Heißwassers in den Vorratsbehälter 6 wird dessen Behälterwand 12 vergleichsweise schonend erwärmt, jedenfalls schonender als bei einem unmittelbaren Eintritt von Heißdampf. Dadurch werden ein Temperaturschock und damit zusammenhängende Materialbelastungen vermieden. Zudem nimmt der Dampfdruck nicht so schnell ab, wie es bei einer direkten Kondensation des Dampfes an der kalten Behälterwand 12 des Vorratsbehälters 6 der Fall wäre.

Das Einströmen des heißen Treibfluids 14 in den Vorratsbehälter 6 erfolgt bevorzugt in der Weise, dass eine Verwirbelung oder Vermischung mit der kalten Absorberflüssigkeit 4 vermieden wird, und somit die aufgrund der Dichteunterschiede sich einstellende ursprüngliche Temperaturschichtung erhalten bleibt. Das heißt, zwischen der kalten Absorberflüssigkeit 4 und dem heißen Treibfluid 14 liegt eine relativ scharf definierte Grenzfläche 27 vor, die auch im Verlauf des Einströmvorganges erhalten bleibt und dabei kontinuierlich nach unten wandert. Zu diesem Zweck weist der Mündungsbereich 28 der Überströmleitung 22 in den Vorratsbehälter 6 ein mit einer Vielzahl von (beispielsweise auf einer Zylindermantelfläche angeordneten) Austrittsdüsen 35 versehenes Drosselelement 36 zur geeigneten Strömungsbeeinflussung auf. In dem Drosselelement 36 ist ferner ein Siebblech 38 angeordnet.
Das Einspeisesystem 2 ist mit den angegebenen Abmessungen besonders als schnell aktivierbares Boreinspeisesystem in einer Kernkraftanlage, insbesondere in einer Siedewasser-Kernkraftanlage, geeignet. Die beiden über die Überströmleitung 22 verbundenen Druckbehälter (Vorratsbehälter 6 und Druckbehälter 16) sind dabei vergleichsweise schlank und hoch ausgeführt, damit die Behälterwände 12, 12' dünn gehalten werden können. In diesem Fall sind die thermischen Lasten aufgrund der schnellen Erwärmung des Vorratsbehälters 6 beim Einspeisevorgang geringer als bei einem niedrigeren Behälter mit entsprechend dickerer Wandstärke. Für andere Anwendungsfälle können Volumenverhältnisse günstiger sein, die von den oben genannten abweichen.

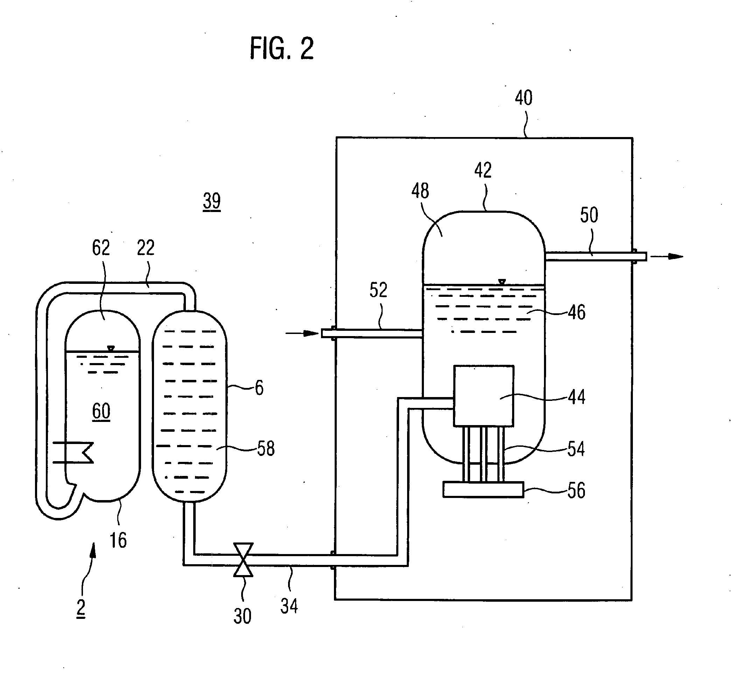

Fig. 2 zeigt einen schematischen Ausschnitt aus einer Siedewasser-Kernkraftanlage 39 mit einem Einspeisesystem 2 gemäß Fig. 1. In einem Sicherheitsbehälter 40 ist ein Reaktordruckbehälter 42 mit einem Kernbereich 44 angeordnet. Der Reaktordruckbehälter 42 ist zum Teil mit einer Kühlflüssigkeit 46 angefüllt. Oberhalb der Kühlflüssigkeit 46 befindet sich Dampf 48, der über eine Dampfleitung 50 aus dem Sicherheitsbehälter 40 herausgeführt und zu einer nicht näher dargestellten Turbine geleitet wird. Abgekühlte Kühlflüssigkeit 46 wird dem Reaktordruckbehälter 42 über eine Leitung 52 wieder zugeführt. Die Leistung des Kernreaktors kann durch Einfahren bzw. Ausfahren der Steuerstäbe 54 in den Kernbereich 44 geregelt werden. Die Steuerstäbe 54 werden dabei durch ein redundant ausgeführtes Antriebssystem 56 bewegt.

Sollte dennoch bei einem gravierenden Störfall die störungsfreie Manipulierbarkeit der Steuerstäbe 54 nicht mehr gewährleistet sein, so kann die Kernreaktion durch die Einspeisung von Borsäure 58 in den Kernbereich 44 des Siedewasserreaktors unterbrochen werden (so genanntes Vergiftungssystem). Die Borsäure 58 wird in einem Vorratsbehälter 6 eines Notfalleinspeisesystems 2 gemäß Fig. 1 unter hohem Druck bereitgehalten. Das Einspeisesystem 2 weist dazu einen über eine Überströmleitung 22 mit dem Vorratsbehälter 6 für die Borsäure 58 verbundenen Druckbehälter 16 auf, in welchem durch Erhitzen von Wasser 60 ein Sattdampfpolster 62 erzeugt wird.

Das Einspeisesystem 2 und das zugehörige Betriebsverfahren erlauben bevorzugt bei Siedewasser-Kernkraftanlagen und insbesondere bei Störfällen, eine zuverlässige Versorgung des Reaktorkerns mit einer für eine Schnellabschaltung vorgesehenen Absorberflüssigkeit 4, insbesondere Borsäure, wobei während des vorangehenden Bereithaltezeitraumes eine Korrosion des Vorratsbehälters 6 und/oder eine Dissoziation der Absorberflüssigkeit 4 vermieden ist.

### Bezugszeichenliste

- 2: Einspeisesystem
- 4: Absorberflüssigkeit
- 6: Vorratsbehälter
- 8, 8': Bodenbereich
- 10, 10': Deckenbereich
- 12, 12': Behälterwand
- 14: Treibfluid
- 16: Druckbehälter
- 18: Heizeinrichtung
- 20: Dampfpolster
- 22: Überströmleitung
- 23: unterer Teilabschnitt
- 24: Steigrohr
- 25: oberer Teilabschnitt
- 26: Anschlussflansch
- 27: Grenzfläche
- 28: Mündungsbereich
- 30: Absperrvorrichtung
- 32: Ausströmöffnung
- 34: Verbindungsleitung
- 35: Austrittsdüse
- 36: Drosselelement
- 38: Siebblech
- 39: Siedewasser - Kernkraftanlage
- 40: Sicherheitsbehälter
- 42: Reaktordruckbehälter
- 44: Kernbereich
- 46: Kühlflüssigkeit
- 48: Dampf
- 50: Dampfleitung

- 52: Leitung
- 54: Steuerstäbe
- 56: Antriebssystem
- 58: Borsäure
- 60: Wasser
- 62: Sattdampfpolster

- D, D': Durchmesser
- h: Füllhöhe
- H: Bauhöhe

## Patentansprüche

1. Einspeisesystem (2) für eine ein Neutronengift enthaltende Absorberflüssigkeit (4) zur Schnellabschaltung eines Kernreaktors,
mit einem Vorratsbehälter (6), der mit einer im Wesentlichen auf Zimmertemperatur befindlichen Absorberflüssigkeit (4) gefüllt ist,
und mit einem Druckbehälter (16), der ein erhitztes und unter Druck stehendes Treibfluid (4), nämlich Wasser und Wasserdampf, enthält,
wobei der Druckbehälter (16) eine regelbare Heizeinrichtung (18) aufweist, die das Treibfluid (4) im erhitzten und teilweise verdampften Zustand hält, so dass sich in einem oberen Bereich des Druckbehälters (16) ein Dampfpolster (20) aus verdampftem Treibfluid (4) und darunter flüssiges Treibfluid (4) befindet, wobei der Vorratsbehälter (6) und der Druckbehälter (16) als separate Behälter ausgeführt und durch eine Überströmleitung (22) miteinander verbunden sind,
wobei die Überströmleitung (22) den Bodenbereich (8') des Druckbehälters (16) mit dem Deckenbereich (10) des Vorratsbehälters (6) verbindet und in Überströmrichtung gesehen ein Steigrohr (24) umfasst,
wobei über die Überströmleitung (22) ein Druckausgleich zwischen dem Druckbehälter (16) und dem Vorratsbehälter (6) erfolgt, so dass in dem Druckbehälter (16) und in dem Vorratsbehälter (6) stets der gleiche Druck herrscht,
und wobei im Bodenbereich (8) des Vorratsbehälters (6) eine mit einer zur Aktivierung des Einspeisevorgangs öffenbaren Absperrvorrichtung (30) verschlossen gehaltene Ausströmöffnung (32) vorgesehen ist.

2. Einspeisesystem (2) nach Anspruch 1,
**dadurch gekennzeichnet, dass**
die druckbelasteten Komponenten, insbesondere der Druckbehälter (16), der Vorratsbehälter (6) und die Überströmleitung (22), für einen Betriebsdruck von über 100 bar, insbesondere etwa 150 bar, ausgelegt sind.

3. Einspeisesystem (2) nach Anspruch 1 oder 2,
**dadurch gekennzeichnet, dass**
der Druckbehälter (16) dauerhaft für die Bereitstellung von Treibfluid (14) mit einer Temperatur von über 300 °C, insbesondere etwa 340 °C, ausgelegt ist.

4. Einspeisesystem (2) nach einem der Ansprüche 1 bis 3,
**dadurch gekennzeichnet, dass**
der Druckbehälter (16) derart dimensioniert ist, dass er eine zur vollständigen Verdrängung der Absorberflüssigkeit (4) aus dem Vorratsbehälter (6) ausreichende Menge an Treibfluid (14) aufnehmen kann.

5. Einspeisesystem (2) nach einem der Ansprüche 1 bis 4,
**dadurch gekennzeichnet, dass**
im Vorratsbehälter (6) als Absorberflüssigkeit (4) eine wässrige Borlösung vorgehalten ist.

6. Verfahren zum Bereitstellen einer in einem Vorratsbehälter (6) eines Einspeisesystems (2) nach einem der Ansprüche 1 bis 5 unter einem Betriebsdruck stehenden Absorberflüssigkeit (4),
**dadurch gekennzeichnet, dass**
der Betriebsdruck durch Erhitzen des Treibfluids (14) in dem Druckbehälter (16) erzeugt wird.

7. Verfahren nach Anspruch 6,
**dadurch gekennzeichnet, dass**
der Druckbehälter (16) derart beheizt wird, dass das Treibfluid (14) während des Bereithaltezeitraumes in einem unteren Bereich des Druckbehälters (16) in flüssiger Form vorgehalten wird, und dass darüber ein sich durch Verdampfung des Treibfluids (14) ausbildendes Dampfpolster (20) aufrechterhalten wird.

8. Verfahren zum Einspeisen der durch ein Einspeisesystem (2) nach einem der Ansprüche 1 bis 5 unter einem Betriebsdruck bereitgestellten Absorberflüssigkeit (4) in eine dem Vorratsbehälter (6) nachgeschaltete Komponente einer Anlage, insbesondere in einen Kernreaktor,
**dadurch gekennzeichnet, dass**
zuerst flüssiges und anschließend dampfförmiges Treibfluid (14) in den Vorratsbehälter (6) eingeleitet wird, wobei die Absorberflüssigkeit (4) verdrängt wird.

9. Verfahren nach Anspruch 8,
**dadurch gekennzeichnet, dass**
die Überströmgeschwindigkeit des Treibfluids (14) während des Einspeisevorgangs derart niedrig eingestellt wird, dass eine Vermischung mit der Absorberflüssigkeit (4) im Wesentlichen unterbleibt.

10. Kernkraftanlage, insbesondere Siedewasser-Kernkraftanlage, mit einem Einspeisesystem (2) nach einem der Ansprüche 1 bis 5, insbesondere zur Schnellabschaltung eines Kernreaktors.

## Claims

1. A feeding system (2) for an absorbing liquid (4) containing a neutron poison for an emergency shutdown of a nuclear reactor,
having a storage vessel (6) filled with an absorbing liquid (4) of substantially ambient temperature,
and having a pressure vessel (16) containing a heated and pressurized propelling fluid (4), namely water and water vapor,
the pressure vessel (16) including a controllable heating device (18) keeping the propelling fluid (4) in the heated and partly evaporated state, so that in the upper area of the pressure vessel (16), there is a vapor blanket (20) of evaporated propelling fluid (4) and, therebelow, there is liquid propelling fluid (4),
the storage vessel (6) and the pressure vessel (16) being designed as separate vessels connected with each other by an overflow conduit (22),
the overflow conduit (22) connecting the bottom area (8') of the pressure vessel (16) with the ceiling area (10) of the storage vessel (6) and comprising, viewed in overflow direction, an ascending pipe (24),
a pressure compensation between the pressure vessel (16) and the storage vessel (6) being effected by the overflow conduit (22), so that always the same pressure exists in the pressure vessel (16) and in the storage vessel (6),
and an outlet port (32), kept closed by means of a locking device (30) which can be opened for activating the feeding process, being provided in the bottom area (8) of the storage vessel (6).

2. The feeding system (2) of claim 1,
**characterized in that**
the pressurized components, in particular the pressure vessel (16), the storage vessel (6) and the overflow conduit (22), are designed for an operating pressure of more than 100 bar, in particular approx. 150 bar.

3. The feeding system (2) of claim 1 or 2,
**characterized in that**
the pressure vessel (16) is designed permanently for provisioning propelling fluid (14) of a temperature of more than 300°C, in particular approx. 340°C.

4. The feeding system (2) of any of claims 1 to 3,
**characterized in that**
the pressure vessel (16) is dimensioned such that it can receive a quantity of propelling fluid (14) which is sufficient for a complete displacement of the absorbing liquid (4) from the storage vessel (6).

5. The feeding system (2) of any of claims 1 to 4,
**characterized in that**
an aqueous boron solution is stored in the storage vessel (6) as an absorbing liquid (4).

6. A method for provisioning an absorbing liquid (4) which is subject to an operating pressure in a storage vessel (6) of a feeding system (2) according to any of claims 1 to 5,
**characterized in that**
the operating pressure is generated by heating the propelling fluid (14) in the pressure vessel (16).

7. The method of claim 6,
**characterized in that**
the pressure vessel (16) is heated such that the propelling fluid (14) is stored in liquid form during the period of provisioning, in a lower section of the pressure vessel (16), and **in that** a vapor blanket (20) forming through evaporation of the propelling fluid (14) is maintained thereabove.

8. A method for feeding the absorbing liquid (4) provisioned, subject to an operating pressure, by a feeding system (2) according to any of claims 1 to 5, into a component, connected downstream of the storage vessel (6), of a plant, in particular into a nuclear reactor;
**characterized in that**
first of all, liquid propelling fluid (14) and then, vaporous propelling fluid (14) is fed into the storage vessel (6), the absorbing liquid (4) being displaced.

9. The method of claim 8,
**characterized in that**
the overflow speed of the propelling fluid (14) during the feeding process is adjusted so low that a mixing with the absorbing liquid (4) is substantially excluded.

10. A nuclear power plant, in particular a boiling-water nuclear power plant, having a feeding system (2) according to any of claims 1 to 5, in particular for an emergency shutdown of a nuclear reactor.

## Revendications

1. Système d'injection (2) pour un liquide absorbant (4) contenant un poison nucléaire pour un arrêt d'urgence d'un réacteur nucléaire,
ayant un réservoir (6) rempli d'un liquide absorbant (4) de température ambiente essentiellement,
et ayant un cuve sous pression (16) contenant un fluide propulseur (4) échauffé et soumis à la pression, à savoir de l'eau et de vapeur d'eau,
la cuve sous pression (16) comprenant un dispositif de chauffage (18) réglable, maintenant le fluide propulseur (4) dans l'état échauffé et partiellement évaporé, de façon que, dans la zone supérieure de la cuve sous pression (16), il y a une couche de vapeur (20) de fluide propulseur (4) évaporé et, ci-dessous, il se trouve du fluide propulseur (4) liquide,
le réservoir (6) et la cuve sous pression (16) étant réalisés comme récipients séparés, reliés l'un avec l'autre par une conduite de trop-plein (22),
la conduite de trop-plein (22) reliant la zone du fond (8') de la cuve sous pression (16) avec la zone du plafond (10) du réservoir (6) et comprenant, vu en direction de trop-plein, un tuyau ascendant (24),
une compensation de pressions entre la cuve sous pression (16) et le réservoir (6) étant effectuée par la conduite de trop-plein (22), de façon que toujours la même pression existe dans la cuve sous pression (16) et dans le réservoir (6),
et une ouverture d'éjection (32), maintenue fermée au moyen d'un dispositif de blocage (30) qui peut être ouvert pour activer le processus d'injection, étant prévue dans la zone du fond (8) du réservoir (6).

2. Système d'injection (2) selon la revendication 1,
**caractérisé en ce que**
les composants soumis à la pression, en particulier la cuve sous pression (16), le réservoir (6) et la conduite de trop-plein (22), sont étudiés pour une pression de service de plus de 100 bars, en particulier d'environ 150 bars.

3. Système d'injection (2) selon la revendication 1 ou 2,
**caractérisé en ce que**
la cuve sous pression (16) est réalisée de manière permanente pour l'approvisionnement de fluide propulseur (14) d'une température de plus de 300°C, en particulier d'environ 340°C.

4. Système d'injection (2) selon l'une quelconque des revendications 1 à 3,
**caractérisé en ce que**
la cuve sous pression (16) est dimensionnée de façon qu'elle peut recevoir une quantité de fluide propulseur (14) suffisante pour un déplacement complet du liquide absorbant (4) hors du réservoir (6).

5. Système d'injection (2) selon l'une quelconque des revendications 1 à 4,
**caractérisé en ce que**
une solution aqueuse de bore est stockée dans le réservoir (6) comme liquide absorbant (4).

6. Procédé pour l'approvisionnement d'un liquide absorbant (4) qui est soumis à une pression de service dans un réservoir (6) d'un système d'injection (2) selon l'une quelconque des revendications 1 à 5,
**caractérisé en ce que**
la pression de service est générée par l'échauffement du fluide propulseur (14) dans la cuve sous pression (16).

7. Procédé selon la revendication 6,
**caractérisé en ce que**
la cuve sous pression (16) est échauffé de façon que le fluide propulseur (14) est stocké sous forme liquide pendant la période d'approvisionnement, dans une zone inférieure de la cuve sous pression (16), et **en ce qu'**une couche de vapeur (20) formant par l'évaporation du fluide propulseur (14) est maintenue ci-dessus.

8. Procédé pour injecter le liquide absorbant (4) approvisionné, sousmis à une pression de service, par un système d'injection (2) selon l'une quelconque des revendications 1 à 5, dans un composant, connecté en aval du réservoir (6), d'une installation, en particulier dans un réacteur nucléaire;
**caractérisé en ce que**,
d'abord, du fluide propulseur (14) liquide et ensuite, du fluide propulseur (14) à l'état de vapeur, est injecté dans le réservoir (6), le liquide absorbant (4) étant déplacé.

9. Procédé selon la revendication 8,
**caractérisé en ce que**
la vitesse de trop-plein du fluide propulseur (14) pendant le processus d'injection est réglée à une valeur si basse qu'un mélangement avec le liquide absorbant (4) est essentiellement exclu.

10. Centrale nucléaire, en particulier une centrale nucléaire à réacteur à eau bouillante, ayant un système d'injection (2) selon l'une quelconque des revendications 1 à 5, en particulier pour un arrêt d'urgence d'un réacteur nucléaire.
